# EUROPEAN PATENT APPLICATION

(11) **EP 4 171 096 A1**
(43) Date of publication of application: **26.04.2023**
(21) Application number: 21203978.8
(22) Date of filing: 21.10.2021
(51) Int. Cl.: H04W 24/02

(54) **AUTONOMOUS PERFORMANCE OPTIMIZATION OF COMMUNICATION ELEMENT OR FUNCTION**

(71) Applicant: Nokia Technologies Oy, 02610 Espoo (FI)
(72) Inventor: SABOURI-SICHANI, Faranaz, 9220 Aalborg (DK); SANCHEZ, Laura Luque, 9240 Nibe (DK); FREDERIKSEN, Frank, 9270 Klarup (DK)
(74) Representative: Nokia EPO representatives

(57) **Abstract**

There are provided measures for enabling/realizing an autonomous performance optimization of a communication element or function, such as an UE-autonomous performance optimization in a mobile communication system. Such measures exemplarily comprise that a communication element or function in a mobile communication system obtains a measurement value of a radio resource quantity for a candidate for a designated operation, applies a bias to the measurement value of the radio resource quantity for the candidate to obtain a biased measurement value for the candidate, and executes the designated operation with respect to the candidate based on the biased measurement value for the candidate.

## Description

### Field

The present disclosure relates to an autonomous performance optimization of a communication element or function. More specifically, the present disclosure relates to measures/mechanisms (including methods, apparatuses (i.e. devices, entities, elements and/or functions) and computer program products) for enabling/realizing an autonomous performance optimization of a communication element or function, such as an UE-autonomous performance optimization in a mobile communication system.

### Background

The present disclosure basically relates to performance optimization of a communication element or function, such as a user equipment (UE), in a (mobile/wireless) communication system, such as 5G/NR systems and next generation systems beyond 5G.

In general terms, UE performance relates to or depends on whether a designated operation is executed in a favorable manner which may be the case when the designated operation is executed on a favorable candidate or executing the designated operation results in a favorable behavior of the UE. For example, when the designated operation is a cell re-/selection, the UE may have various cell candidates for re-/selection, and its performance degrades when a cell is chosen for re-/selection, which is an unfavorable cell or results in an unfavorable behavior. Such unfavorable outcome may occur e.g. when the re-/selected cell leads to conflicting frequencies, increased power consumption, increased switching delay, or the like.

In the following, specific considerations in terms of UE performance are exemplarily explained for MUSIM devices, i.e. devices (UEs) with multiple subscriber identity modules (SIMs) and/or universal subscriber identity modules (USIMs). In this regard, it is to be noted that in the present disclosure the term "SIM" and the term "USIM" are not particularly distinguished and, thus, are to be understood as synonymous or interchangeable terms, such that all references to "USIM" equally apply for "SIM" and vice versa.

A MUSIM device has two simultaneous 3GPP/3GPP2 network subscriptions (in case of a Dual-USIM device) or more simultaneous 3GPP/3GPP2 network subscriptions (in case of a Multiple-USIM device) with a corresponding number of International Mobile Subscriber Identities (IMSI) in case of EPS or Subscription Permanent Identifiers (SUPI) in case of 5GS, each associated with a particular subscription belonging to the same or different Mobile Network Operator (MNO) or Mobile Virtual Network Operator (MVNO).

Two main types of MUSIM devices are normally referred to depending on the supported simultaneous RRC_states on the USIMs.

Dual SIM Dual Standby (DSDS) or Multi USIM Multi Standby (MUMS) devices, i.e. MUSIM devices which are registered with two or more independent subscriber identities (USIMs) and can be in RRC_IDLE state on/with all USIMs, but can only be in RRC_CONNECTED state on/with a single USIM at a given time.

Dual SIM Dual Active (DSDA) or Multi USIM Multi Active (MUMA) devices, i.e. MUSIM devices which are registered with two or more independent subscriber identities (USIMs) and can be in RRC_IDLE state on/with all USIMs, and can be in RRC_CONNECTED state, namely maintain RRC_CONNECTED state activities, on/with more than one or even all USIMs at the same time.

Furthermore, the UE's behavior with respect to the simultaneous handling of multiple USIMs may depend on the UE's capabilities related to concurrent independent RX and/or TX operations.

Reference is made to SingleRX/SingleTX when the (MUSIM) UE is only capable of receiving traffic from one network and and/or transmitting traffic to one network at a time.

Reference is made to DualRX/SingleTX when the (Dual-USIM) UE is capable of simultaneously receiving traffic from two networks but is capable of transmitting to only one network at a time.

Reference is made to DualRX/DualTx when the (Dual-USIM) UE is capable of simultaneously receiving and/or transmitting to/from two networks at a time.

A DualRX UE is expected to perform simultaneous RX activities on both of its USIMs, e.g. perform reception on its USIM in RRC_IDLE/RRC_INACTIVE state or RRC_CONNECTED state while maintaining RRC connection on its other USIM or perform independent RRC_IDLE / RRC_INACTIVE / RRC_CONNECTED operations concurrently on both USIMs.

However, a DualRX UE may still act as a SingleRX UE e.g. for some specific combination/s of frequency ranges, frequency bands, carriers, or the like, e.g. due to one or more of the following reasons.

Depending on the radio-frequency hardware design not all RX and TX chains can cover the full range of two frequency ranges and support MIMO.

Depending on the radio-frequency hardware design front-end components can be shared for frequency ranges, frequency bands, carriers, or the like, such as carriers in the same frequency band group.

In-device self-interference cancellation can be applied to cancel generated continuous waves and/or modulated spurs. However, this needs synchronized knowledge on local oscillators on RX and TX chains, which is not available in MUSIM devices.

As explained above, a MUSIM device with more than one RX and TX chain may be able to act as a DualRX UE, i.e. can be capable of simultaneously receiving traffic from two networks for some specific combination/s of frequency ranges, frequency bands, carriers, or the like, while it may act as SingleRX, i.e. be only capable of receiving traffic from one network for some other combination/s of frequency ranges, frequency bands, carriers, or the like. Likewise, a DualRX/DualTX UE may have limitation to support reception and/or transmission to/from two networks simultaneously for some specific combination/s of frequency ranges, frequency bands, carriers, or the like. Acting as SingleRX/SingleTX UE for all of such combinations is not efficient, as the UE will then not make use of its maximum capabilities. A change of behavior would be that the UE will act as DualRX UE whenever possible and act as SingleRX UE when not possible. This will reduce the problem of performance degradation to some extent, but will not be efficient or optimal, as the UE will still have degraded performance on both USIMs when acting as SingleRX UE.

Accordingly, there is need for further optimization to increase UE performance for MUSIM devices, i.e. to increase the MUSIM UE's possibility to act as DualRX and thereby decrease the performance degradation in the UE's MUSIM operation. Such further optimization may be achieved by way of appropriate control.

More generally, irrespective of whether the UE is a single- or multi-USIM/subscription device, the UE is typically controlled by the network, i.e. a communication control element or function, in order to accomplish appropriate UE performance. For instance, referring to the above example, network control may enable the UE to choose the best cell for re-/selection. Such network control typically provides relevant information and/or instructions as to how a designated operation is to be executed, e.g. on which candidate the designated operation is to be executed and/or how the appropriate candidate is to be chosen, for achieving a favorable outcome.

However, relying on network control for accomplishing appropriate UE performance has certain drawbacks. For example, appropriate UE performance cannot be accomplished when the network control is not (timely) available or not expedient (e.g. due to network problems or network-internal problems), and providing network control is subject to standardization, e.g. 3GPP/3GPP2 RAN-related standardization, in order to ensure compliant/compatible network operation. It would thus be desirable to have a technique for accomplishing appropriate UE performance without (the need of) any specific network control.

Therefore, there is room for improvement and a desire/need for a technique for (enabling/realizing) autonomous performance optimization of a communication element or function, such as an UE-autonomous performance optimization in a mobile communication system.

### Summary

Various exemplifying embodiments of the present disclosure aim at addressing at least part of the above issues and/or problems and drawbacks.

Various aspects of exemplifying embodiments of the present disclosure are set out in the appended claims.

According to an example aspect of the present disclosure, there is provided an apparatus of (or, stated in other words, operable or for use in/by) a communication element or function in a mobile communication system, comprising: means for obtaining a measurement value of a radio resource quantity for a candidate for a designated operation, means for applying a bias to the measurement value of the radio resource quantity for the candidate to obtain a biased measurement value for the candidate, and means for executing the designated operation with respect to the candidate based on the biased measurement value for the candidate.

According to various developments/modifications, the aforementioned apparatus-related example aspect of the present disclosure may include one or more of the following features:
the applying means is configured to add an offset value to the measurement value of the radio resource quantity for the candidate for promoting the candidate in executing the designated operation and/or subtract an offset value from the measurement value of the radio resource quantity for the candidate for demoting the candidate in executing the designated operation, wherein the offset value is a positive number,
the applying means is configured to multiply the measurement value of the radio resource quantity for the candidate by a weighting factor for promoting the candidate in executing the designated operation and/or divide the measurement value of the radio resource quantity for the candidate by a weighting factor for demoting the candidate in executing the designated operation, wherein the weighting factor is a number larger than 1,
the applying means is configured to apply the bias to the measurement value of the radio resource quantity for the candidate such that the candidate is promoted in executing the designated operation when the candidate is a favorable candidate for the designated operation or executing the designated operation on the candidate results in a favorable behavior,
the applying means is configured to apply the bias to the measurement value of the radio resource quantity for the candidate such that the candidate is demoted in executing the designated operation when the candidate is an unfavorable candidate for the designated operation or executing the designated operation on the candidate results in an unfavorable behavior,
the candidate is a favorable candidate rather than an unfavorable candidate for the designated operation or executing the designated operation on the candidate results in a favorable behavior rather than an unfavorable behavior when causing one or more of: reduced frequency conflict between networks, such as public land mobile networks, cells, frequency ranges, frequency bands or carriers, improved simultaneous operation toward two or more communication control elements or functions or two or more network elements or functions, reduced performance degradation, reduced power consumption, reduced switching delay, reduced intermodulation or interference, and increased bandwidth or data rate,
the apparatus further comprises means for adjusting the bias to be applied to the measurement value of the radio resource quantity for the candidate,
the adjusting means is configured to adjust the bias such that the obtained biased measurement value meets predefined measurement accuracy requirements and/or standard conformance requirements for the communication element or function,
the adjusting means is configured to determine a measurement accuracy estimate of the obtained measurement value, wherein the bias is adjusted based on the determined measurement accuracy estimate,
the adjusting means is configured to adjust based on one or more of: a current operating activity and/or condition of the communication element or function, a prioritization of at least one of a network, such as a public land mobile network, a cell, a frequency range, a frequency band, and a carrier, or any combination thereof, a number of served networks, such as one or more public land mobile networks, a number of active cells, frequency ranges, frequency bands and/or carriers, a power consumption per cell, frequency range, frequency band and/or carrier, a switching delay per cell, frequency range, frequency band and/or carrier, a non-/availability of an external power source, an extent of available power, and a bandwidth and/or data rate requirement,
the obtaining means is configured to perform a radio resource measurement or a radio resource management measurement,
the obtaining means is configured to identify the radio resource quantity and/or the candidate for which the measurement value is to be obtained,
the executing means is configured to non-/select the candidate for the designated operation based on the biased measurement value for the candidate,
the apparatus further comprises means for accepting a configuration for obtaining the measurement value from a communication control element or function,
the apparatus further comprises means for providing a measurement report, including the biased measurement value for the candidate, to a communication control element or function,
the radio resource quantity is at least one of reference signal received power, reference signal received quality, and signal-to-interference-plus-noise ratio,
the candidate is at least one of one or more networks, such as one or more public land mobile networks, one or more cells, one or more frequency ranges, one or more frequency bands, and one or more carriers,
the designated operation is at least one of a network or cell handover, a cell selection or reselection, a frequency range selection or reselection, a frequency band selection or reselection, and a carrier selection or reselection,
the communication element or function comprises a user equipment which involves a single network subscription module, including a single subscriber identity module or a single universal subscriber identity module,
the communication element or function comprises a user equipment which involves multiple network subscription module, including multiple subscriber identity modules or multiple universal subscriber identity modules, and the user equipment is in radio resource control, RRC, connected state with a first network subscription module, and is in any radio resource control, RRC, state with a second network subscription module,
the radio resource measurement is performed for one or more neighboring cells of a serving cell associated with the first network subscription module and/or the serving cell associated with the first network subscription module, the applying means is configured to apply the bias for promoting those one or more neighboring cells, for which a dual-reception and/or dual-transmission operation mode is feasible, and/or demoting those one or more neighboring cells, for which a dual-reception and/or dual-transmission operation mode is infeasible, and/or for promoting the serving cell associated with the first network subscription module, if a dual-reception and/or dual-transmission operation mode is feasible in the serving cell associated with the first network subscription module, and the executing means is configured to select at least one cell for the dual-reception and/or dual-transmission operation mode based on the biased measurement values of the one or more promoted and/or demoted cells, and to execute the designated operation on the selected at least one cell for the dual-reception and/or dual-transmission operation mode,
the applying means is configured to determine, for which one or more neighboring cells a dual-reception and/or dual-transmission operation mode is feasible or infeasible, based on a frequency range, a frequency band or a carrier of a serving cell associated with the second network subscription module and a frequency range, a frequency band or a carrier of the respective neighboring cell.

According to an example aspect of the present disclosure, there is provided an apparatus of (or, stated in other words, operable or for use in/by) a communication element or function in a mobile communication system, the apparatus comprising at least one processor and at least one memory including computer program code, wherein the processor, with the at least one memory and the computer program code, is configured to cause the apparatus to perform: obtaining a measurement value of a radio resource quantity for a candidate for a designated operation, applying a bias to the measurement value of the radio resource quantity for the candidate to obtain a biased measurement value for the candidate, and executing the designated operation with respect to the candidate based on the biased measurement value for the candidate.

According to an example aspect of the present disclosure, there is provided a method of (or, stated in other words, operable or for use in/by) a communication element or function in a mobile communication system, comprising: obtaining a measurement value of a radio resource quantity for a candidate for a designated operation, applying a bias to the measurement value of the radio resource quantity for the candidate to obtain a biased measurement value for the candidate, and executing the designated operation with respect to the candidate based on the biased measurement value for the candidate.

According to various developments/modifications, any one of the aforementioned method-related and/or apparatus-related example aspects of the present disclosure may include one or more of the following features:
applying the bias to the measurement value of the radio resource quantity for the candidate comprises adding an offset value to the measurement value of the radio resource quantity for the candidate for promoting the candidate in executing the designated operation and/or subtracting an offset value from the measurement value of the radio resource quantity for the candidate for demoting the candidate in executing the designated operation, wherein the offset value is a positive number,
applying the bias to the measurement value of the radio resource quantity for the candidate comprises multiplying the measurement value of the radio resource quantity for the candidate by a weighting factor for promoting the candidate in executing the designated operation and/or dividing the measurement value of the radio resource quantity for the candidate by a weighting factor for demoting the candidate in executing the designated operation, wherein the weighting factor is a number larger than 1,
by applying the bias to the measurement value of the radio resource quantity for the candidate, the candidate is promoted in executing the designated operation when the candidate is a favorable candidate for the designated operation or executing the designated operation on the candidate results in a favorable behavior,
by applying the bias to the measurement value of the radio resource quantity for the candidate, the candidate is demoted in executing the designated operation when the candidate is an unfavorable candidate for the designated operation or executing the designated operation on the candidate results in an unfavorable behavior,
the candidate is a favorable candidate rather than an unfavorable candidate for the designated operation or executing the designated operation on the candidate results in a favorable behavior rather than an unfavorable behavior when causing one or more of: reduced frequency conflict between networks, such as public land mobile networks, cells, frequency ranges, frequency bands or carriers, improved simultaneous operation toward two or more communication control elements or functions or two or more network elements or functions, reduced performance degradation, reduced power consumption, reduced switching delay, reduced intermodulation or interference, and increased bandwidth or data rate,
the method, functionality or operability comprises adjusting the bias to be applied to the measurement value of the radio resource quantity for the candidate,
the bias is adjusted such that the obtained biased measurement value meets predefined measurement accuracy requirements and/or standard conformance requirements for the communication element or function,
adjusting the bias comprises determining a measurement accuracy estimate of the obtained measurement value, wherein the bias is adjusted based on the determined measurement accuracy estimate,
the bias is adjusted based on one or more of: a current operating activity and/or condition of the communication element or function, a prioritization of at least one of a network, such as a public land mobile network, a cell, a frequency range, a frequency band, and a carrier, or any combination thereof, a number of served networks, such as one or more public land mobile networks, a number of active cells, frequency ranges, frequency bands and/or carriers, a power consumption per cell, frequency range, frequency band and/or carrier, a switching delay per cell, frequency range, frequency band and/or carrier, a non-/availability of an external power source, an extent of available power, and a bandwidth and/or data rate requirement,
obtaining the measurement value comprises performing a radio resource measurement or a radio resource management measurement,
obtaining the measurement value comprises identifying the radio resource quantity and/or the candidate for which the measurement value is to be obtained,
executing the designated operation comprises non-/selecting the candidate for the designated operation based on the biased measurement value for the candidate,
the method, functionality or operability comprises accepting a configuration for obtaining the measurement value from a communication control element or function,
the method, functionality or operability comprises providing a measurement report, including the biased measurement value for the candidate, to a communication control element or function,
the radio resource quantity is at least one of reference signal received power, reference signal received quality, and signal-to-interference-plus-noise ratio,
the candidate is at least one of one or more networks, such as one or more public land mobile networks, one or more cells, one or more frequency ranges, one or more frequency bands, and one or more carriers,
the designated operation is at least one of a network or cell handover, a cell selection or reselection, a frequency range selection or reselection, a frequency band selection or reselection, and a carrier selection or reselection,
the method, functionality or operability is operable at or by a user equipment which involves a single network subscription module, including a single subscriber identity module or a single universal subscriber identity module,
the method, functionality or operability is operable at or by a user equipment which involves multiple network subscription module, including multiple subscriber identity modules or multiple universal subscriber identity modules, and the user equipment is in radio resource control, RRC, connected state with a first network subscription module, and is in any radio resource control, RRC, state with a second network subscription module,
the radio resource measurement is performed for one or more neighboring cells of a serving cell associated with the first network subscription module and/or the serving cell associated with the first network subscription module, the bias is applied for promoting those one or more neighboring cells, for which a dual-reception and/or dual-transmission operation mode is feasible, and/or demoting those one or more neighboring cells, for which a dual-reception and/or dual-transmission operation mode is infeasible, and/or the bias is applied for promoting the serving cell associated with the first network subscription module, if a dual-reception and/or dual-transmission operation mode is feasible in the serving cell associated with the first network subscription module, and at least one cell for the dual-reception and/or dual-transmission operation mode is selected based on the biased measurement values of the one or more promoted and/or demoted cells, and the designated operation is executed on the selected at least one cell for the dual-reception and/or dual-transmission operation mode,
applying the bias comprises determining, for which one or more neighboring cells a dual-reception and/or dual-transmission operation mode is feasible or infeasible, based on a frequency range, a frequency band or a carrier of a serving cell associated with the second network subscription module and a frequency range, a frequency band or a carrier of the respective neighboring cell.

According to an example aspect of the present disclosure, there is provided a computer program product comprising (computer-executable) computer program code which, when the program code is executed (or run) on a computer or the program is run on a computer (e.g. a computer of an apparatus according to any one of the aforementioned apparatus-related example aspects of the present disclosure), is configured to cause the computer to carry out the method according to the aforementioned method-related example aspect of the present disclosure.

The computer program product may comprise or may be embodied as a (tangible/non-transitory) computer-readable (storage) medium or the like, on which the computer-executable computer program code is stored, and/or the program is directly loadable into an internal memory of the computer or a processor thereof.

Further developments and/or modifications of the aforementioned exemplary aspects of the present disclosure are set out in the following.

By way of exemplifying embodiments of the present disclosure, autonomous performance optimization of a communication element or function, such as an UE-autonomous performance optimization in a mobile communication system, can be enabled/realized.

### Brief description of the drawings

In the following, the present disclosure will be described in greater detail by way of non-limiting examples with reference to the accompanying drawings, in which
Figure 1 shows a flowchart illustrating an example of a method or process according to at least one exemplifying embodiment,
Figure 2 shows a flowchart illustrating an example of a method or process according to at least one exemplifying embodiment,
Figure 3 shows a sequence diagram illustrating an example of a procedure according to at least one exemplifying embodiment,
Figure 4 shows a schematic block diagram illustrating an example of a structure of an apparatus according to at least one exemplifying embodiment, and
Figure 5 shows a schematic block diagram illustrating an example of a structure of an apparatus according to at least one exemplifying embodiment.

### Detailed description

The present disclosure is described herein with reference to particular non-limiting examples and to what are presently considered to be conceivable (examples of) embodiments. A person skilled in the art will appreciate that the present disclosure is by no means limited to these examples and embodiments, and may be more broadly applied.

It is to be noted that the following description mainly refers to specifications being used as non-limiting examples for certain exemplifying network configurations and system deployments. Namely, the following description mainly refers to 3GPP/3GPP2 standards, being used as non-limiting examples. As such, the description of exemplifying embodiments given herein specifically refers to terminology which is directly related thereto. Such terminology is only used in the context of the presented non-limiting examples and embodiments, and does naturally not limit the present disclosure in any way. Rather, any other system configuration or deployment may equally be utilized as long as complying with what is described herein and/or exemplifying embodiments described herein are applicable to it.

For examples, the present disclosure is equally applicable in any (mobile/wireless) communication system, including any modern/future systems such as 5G/NR systems and next generation systems beyond 5G, as well as any current/legacy systems such as 3G, 4G, LTE(-A) systems.

Hereinafter, various exemplifying embodiments and implementations of the present disclosure and its aspects are described using several variants and/or alternatives. It is generally to be noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of operations or actions is generally illustrative/exemplifying, and any other order of respective operations or actions is equally conceivable, if feasible.

According to exemplifying embodiments of the present disclosure, in general terms, there are provided measures/mechanisms (including methods, apparatuses (i.e. devices, entities, elements and/or functions) and computer program products) for enabling/realizing autonomous performance optimization of a communication element or function, such as an UE-autonomous performance optimization in a mobile communication system. Amongst others, these measures/mechanisms comprise biasing of a measurement value, such as a radio resource (management) measurement result, underlying a designated operation, thus allowing that the communication element or function improves its performance in an autonomous manner, i.e. without network control.

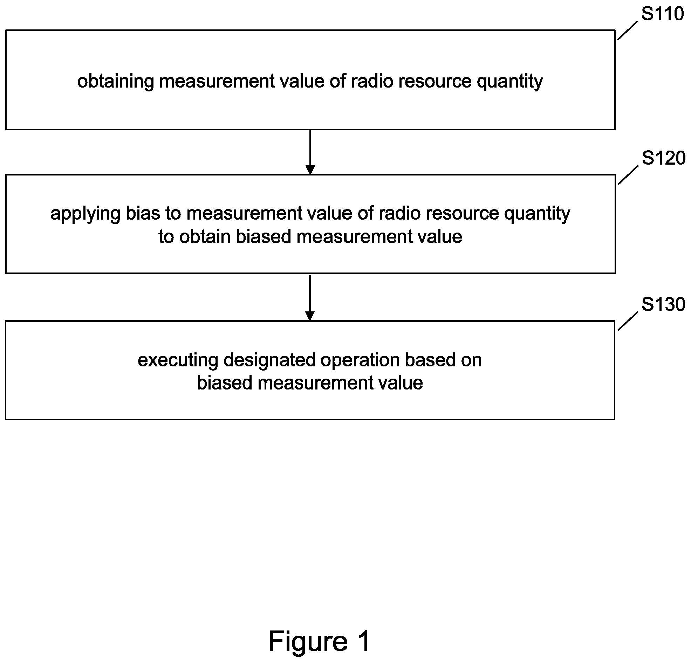

Figure 1 shows a flowchart illustrating an example of a method or process according to at least one exemplifying embodiment. The method or process of Figure 1 is a method or process of (or, stated in other words, operable or for use in/by) a communication element or function, or an element, function or entity of similar/comparable functionality or operability, in a mobile communication system, such as a UE (including a single- or multi-USIM/subscription device) in a 3GPP/3GGP2 network or system. The method or process of Figure 1 may be performed at/by the communication element or function, such as the UE, in a periodic, triggered or event-based manner.

As shown in Figure 1, the method or process comprises an operation (S110) of obtaining a measurement value of a radio resource quantity for a candidate for a designated operation, an operation (S120) of applying a bias to the measurement value of the radio resource quantity for the candidate to obtain a biased measurement value for the candidate, and an operation (S130) of executing the designated operation (with respect to the candidate) based on the biased measurement value for the candidate.

According to various exemplifying embodiments, the measurement value can be obtained by performing a radio resource measurement or a radio resource management (RRM) measurement, as exemplified below.

According to various exemplifying embodiments, the radio resource quantity may be at least one of reference signal received power (RSRP), reference signal received quality (RSRQ), and signal-to-interference-plus-noise ratio, and/or the candidate may be at least one of one or more networks, such as one or more public land mobile networks (PLMN), one or more cells, one or more frequency ranges, one or more frequency bands, and one or more carriers, and/or the designated operation may be at least one of a network or cell handover, a cell selection or reselection, a frequency range selection or reselection, a frequency band selection or reselection, and a carrier selection or reselection. More specifically, a candidate may be any element, parameter, etc. which can be selected/chosen, used, applied, etc. in/for a designated operation, such as e.g. a PLMN ID when the UE has the option to connect to two or more different PLMNs (e.g. in case of roaming), a cell when the UE has the option to operate on two or more different cells (e.g. in case of cell re-/selection), or the like.

As an example, when a UE is to execute a cell, frequency or frequency range re-/selection, the UE performs an RRM measurement by measuring the RSRP of a candidate neighboring cell, a candidate frequency or a candidate frequency range, applies a bias to the RSRP measurement value of the candidate neighboring cell, the candidate frequency or the candidate frequency range, and executes the cell, frequency or frequency range re-/selection based on the biased RSRP measurement value, i.e. by considering/evaluating the candidate neighboring cell, the candidate frequency or the candidate frequency range (i.e. its suitability for being chosen in the re-/selection operation) using its biased RSRP measurement value rather than its original or unbiased RSRP measurement value.

According to various exemplifying embodiments, the bias may be applied to the measurement value of the radio resource quantity for the candidate by adding/subtracting an offset value and/or multiplying/dividing a weighting factor. As one option, the bias may be applied by adding an offset value to the measurement value of the radio resource quantity for the candidate for promoting the candidate in executing the designated operation and/or subtracting an offset value from the measurement value of the radio resource quantity for the candidate for demoting the candidate in executing the designated operation, wherein the offset value is a positive number. As another option, the bias may be applied by multiplying the measurement value of the radio resource quantity for the candidate by a weighting factor for promoting the candidate in executing the designated operation and/or dividing the measurement value of the radio resource quantity for the candidate by a weighting factor for demoting the candidate in executing the designated operation, wherein the weighting factor is a number larger than 1. Likewise, the aforementioned adding/subtracting calculations may be interchanged with the offset value being a negative number, and the aforementioned multiplying/dividing calculations may be interchanged with the weighting factor being a number smaller than 1.

It is noted that the bias for promoting a candidate and the bias for demoting another candidate may be applied alone or in combination, and the bias applied for promoting a candidate and the bias applied for demoting another candidate may have same, corresponding or different (independent) values/numbers.

According to various exemplifying embodiments, the bias may be applied to the measurement value of the radio resource quantity for the candidate such that the candidate is promoted in executing the designated operation when the candidate is a favorable candidate for the designated operation or executing the designated operation on the candidate results in a favorable behavior, and/or the candidate is demoted in executing the designated operation when the candidate is an unfavorable candidate for the designated operation or executing the designated operation on the candidate results in an unfavorable behavior.

According to various exemplifying embodiments, the candidate may be a favorable candidate rather than an unfavorable candidate for the designated operation or executing the designated operation on the candidate results in a favorable behavior rather than an unfavorable behavior when causing one or more of reduced frequency conflict (or, stated in other terms, improved frequency usage or efficiency) between networks, such as public land mobile networks, cells, frequency ranges, frequency bands or carriers, improved simultaneous operation toward two or more communication control elements or functions or two or more network elements or functions (such as e.g. gNBs), reduced performance degradation (or, stated in other terms, increased performance), reduced power consumption (or, stated in other terms, increased power efficiency), reduced switching delay (or, stated in other terms, increased switching speed or increased operational time/on-time or increased duty ratio), reduced intermodulation or interference, increased bandwidth or data rate, or the like.

Returning to the above example, specifically the example of cell re-/selection, the bias application may exemplarily reside in that the UE adds a positive offset value (e.g. 2 dB) to or subtracts a negative offset value (e.g. -2 dB) from the measured RSRP of the candidate neighboring cell so as to promote the candidate neighboring cell for cell re-/selection, when the candidate neighboring cell is (identified/determined as) a good choice, i.e. a favorable cell or as resulting in a favorable behavior, e.g. because of exhibiting no frequency conflict with the serving or current cell, or the UE subtracts a positive offset value (e.g. 2 dB) from or adds a negative value (e.g. -2 dB) to the measured RSRP of the candidate neighboring cell so as to demote the candidate neighboring cell for cell re-/selection, when the candidate neighboring cell is (identified/determined as) a bad choice, i.e. an unfavorable cell or as resulting in an unfavorable behavior, e.g. because of exhibiting a frequency conflict with the serving or current cell. The candidate neighboring cell is thus promoted or demoted in that its actually measured RSRP is increased or decreased and the thus increased or decreased RSRP is used in/for the cell re-/selection. Thereby, the UE is able to advantage an unproblematic or preferred cell or disadvantage a problematic or non-preferred cell, thus ensuring better performance by raising the probability of adopting an unproblematic or preferred cell or lowering the probability of adopting a problematic or non-preferred cell.

Accordingly, the UE may increase the obtained/measured measurement value of a candidate by biasing (in any conceivable way) for promoting the candidate when an increased measurement value is beneficial/conducive for the designated operation being executed with the candidate, and/or the UE may decrease the obtained/measured measurement value of a candidate by biasing (in any conceivable way) for demoting the candidate when a decreased measurement value is prejudicial/detrimental for the designated operation being executed with the candidate. In contrast, the UE may decrease the obtained/measured measurement value of a candidate by biasing (in any conceivable way) for promoting the candidate when a decreased measurement value is beneficial/conducive for the designated operation being executed with the candidate, and/or the UE may increase the obtained/measured measurement value of a candidate by biasing (in any conceivable way) for demoting the candidate when an increased measurement value is prejudicial/detrimental for the designated operation being executed with the candidate.

Thereby, the designated operation can be executed with respect to (i.e. such that it applies to) a specific candidate (which may be and thus encompasses a single candidate or plural candidates) which shall be advantaged or disadvantaged. Hence, when there is some limitation on/for some candidate, this candidate can be demoted (such that e.g. it is not or is less likely used for or in the designated operation), and/or, when there is some preference on/for some candidate, this candidate can be promoted (such that e.g. it is or is more likely used for or in the designated operation),

According to various exemplifying embodiments, the above method or process is applicable for different purposes, use cases or applications, and different effects can be achieved thereby, such as e.g. reduced frequency conflict, improved simultaneous operation, reduced performance degradation, reduced power consumption, reduced switching delay, reduced intermodulation or interference, increased bandwidth or data rate, or the like.

Just to mention some examples, which are however neither limiting nor exhaustive, the above method or process may be applied for
prioritization of a certain frequency range over another frequency range (e.g. if the UE prefers to connect to a first frequency range instead of a second frequency range, it could apply a positive measurement bias to promote the first frequency range, and/or apply a negative measurement bias to demote the second frequency range),
prioritization of selected carriers or frequency bands over other carriers or frequency bands (e.g. if the UE prefers to use a 900 MHz band over other bands, it could apply a positive measurement bias to promote the 900 MHz band, and/or apply a negative measurement bias to demote the other bands),
prioritization based on UE(-internal/autonomous) evaluation to achieve some desired effect or benefit, such as e.g. reduce conflicting frequencies (as some frequency range, frequency band or frequency may exhibit more or more severe conflicts with e.g. the serving or current cell as another frequency range, frequency band or frequency) and/or reduce power consumption (as some hardware related to a specific frequency or frequency range may consume more power than hardware related to another frequency or frequency range) and/or reduce switching delay (related to hardware retuning and/or beam/panel switching for changing a frequency or frequency range).

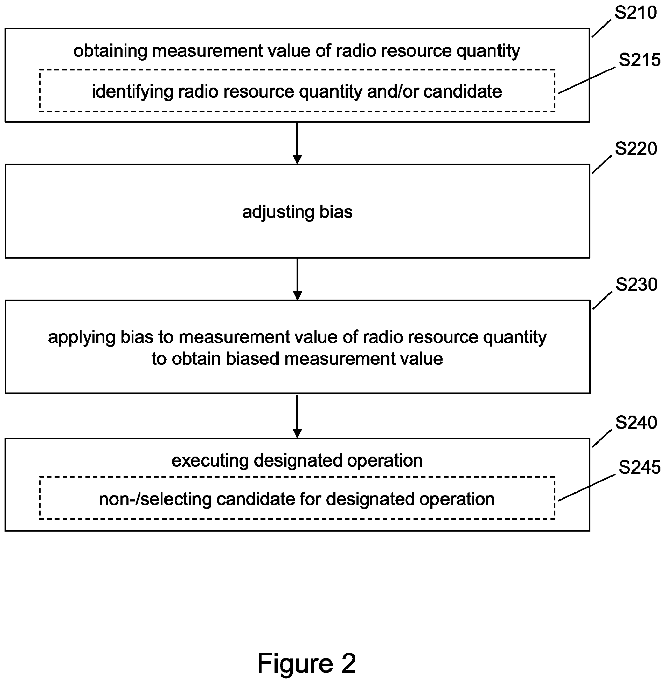

Figure 2 shows a flowchart illustrating an example of a method or process according to at least one exemplifying embodiment. The method or process of Figure 2 is a method or process of (or, stated in other words, operable or for use in/by) a communication element or function, or an element, function or entity of similar/comparable functionality or operability, in a mobile communication system, such as a UE (including a single- or multi-USIM/subscription device) in a 3GPP/3GGP2 network or system. The method or process of Figure 2 may be performed at/by the communication element or function, such as the UE, in a periodic, triggered or event-based manner.

As shown in Figure 2, the method or process comprises an operation of measurement value obtainment (S210), an operation of bias application (S230) and an operation of designated operation execution (S240). These operations S210, S230 and S240 of Figure 2 basically correspond to operations S110, S120 and S130 of Figure 1, respectively. Accordingly, for convenience, reference is made to the above description of/for operations S110, S120 and S130 of Figure 1, which apply accordingly, while omitting a reiterated description thereof.

It is noted that Figure 2 illustrates three additional operations as compared with Figure 1, but such illustration is made for convenience. Namely, it is not required that all of these three operations are present. Rather, these three operations are inherently independent and distinct from each other such that exemplifying embodiments encompass any conceivable combination of one or two of these additional operations being present in a corresponding method or process.

As shown in Figure 2, the operation of measurement value obtainment (S210) comprises an operation (S215) of identifying the radio resource quantity and/or the candidate for which the measurement value is to be obtained. Thereby, the radio resource quantity and/or the candidate for obtaining the measurement value can be identified, e.g. in view of the designated operation, a purpose, a use case, an application, some configuration, or the like. Then, a measurement value of the thus identified radio resource quantity and/or the thus identified candidate is obtained, e.g. by a corresponding radio resource measurement or radio resource management measurement. For example, the UE may identify (i.e. determine) RSRP or SINR as the applicable radio resource quantity and/or a neighboring cell as the applicable candidate upon receiving an RRC configuration for cell handover or cell re-/selection.

As shown in Figure 2, the operation of designated operation execution (S240) comprises an operation (S245) of non-/selecting the candidate for the designated operation based on the biased measurement value for the candidate. Thereby, the candidate may be selected or not selected depending on its biased measurement value. That is, the biased measurement value is used for choosing a candidate as an object of processing of the designated operation. For example, the non-/selecting may be applied by comparing the biased measurement value with a predefined threshold, comparing the biased measurement value with that of another candidate, or the like.

As shown in Figure 2, the method or process comprises an operation (S220) of adjusting (i.e. adapt or set) the bias to be applied to the measurement value of the radio resource quantity for the candidate. Thereby, the bias applied in the operation of bias application (S230) can be dynamically adjusted (i.e. adapted or set).

The (dynamic) bias adjustment may be accomplished in view of and/or depending on any conceivable parameter which would impact the bias to be applied, such as the bias being applied to/for a network, a cell, a frequency range, a frequency band, a carrier, etc. Namely, the (dynamic) bias adjustment may be accomplished e.g. based on one or more of a current operating activity and/or condition of the communication element or function, a prioritization of at least one of a network, such as a public land mobile network, a cell, a frequency range, a frequency band, and a carrier, or any combination thereof (e.g. a band combination in a case where one network operator is providing two frequency bands for an UE and another network operator is providing one or more frequency bands for the UE as well), a number of served networks, such as one or more public land mobile networks, a number of active cells, frequency ranges, frequency bands and/or carriers, a power consumption per cell, frequency range, frequency band and/or carrier, a switching delay per cell, frequency range, frequency band and/or carrier, a non-/availability of an external power source, an extent of available power, a bandwidth and/or data rate requirement, or the like.

As an example, taking into account the switching delay on each frequency band, the UE may prefer to connect to a specific frequency band in order to minimize the delay caused by the hardware tuning to a different frequency band, specially if it is for a UE with high switching effort, such as e.g. a SingleRX MUSIM device which needs to switch continuously between two different frequency bands (one for each of the users in the MUSIM device). As another example, taking into account the bandwidth and/or data rate requirements, the UE may prefer a cell/frequency that is able to provide the higher bandwidth and/or data rate (e.g. capacity cell over coverage cell, or frequency with available higher bandwidth). As a further example, taking into account that the UE's RX and TX chains may consume different levels of power depending on the components in the chain (e.g. switches, low noise amplifiers, filters, power amplifiers etc.), it may happen that a UE operating in lower frequency band consumes less/higher power than in a higher frequency band, and thus the UE may prefer to operate in the lower frequency band. As a still further example, taking into account the kind of power source or power availability (i.e. a non-/availability of an external power source and/or an extent of available power), the UE can make different decisions when biasing the measurement depending on whether or not the UE has access to an external power source (i.e. it is charging), depending on the remaining battery capacity, or the like.

As explained above, various parameters can be used for adjusting the bias to be applied to a candidate. Yet, it is evident that these (or similar) parameters can also be used for the bias application as such, e.g. in the operation S120 of Fig. 1. Namely, like for bias adjustment (i.e. determining a value of the bias to be applied), one or more of these (or similar) parameters can also - additionally and/or alternatively - be used for generally determining which (type of) bias (i.e. a bias for promoting and/or demoting a candidate) is to be applied, irrespective of its value (which may be predefined or adjusted based on other parameter/s).

According to an exemplifying embodiment, the bias may be adjusted such that the obtained biased measurement value meets (i.e. complies with and/or does not violate) predefined measurement accuracy requirements and/or standard conformance requirements for the communication element or function. Also, the bias adjusting operation (S220) may comprise determining a measurement accuracy estimate of the obtained measurement value, and adjusting the bias based on the determined measurement accuracy estimate.

In this regard, it is noted that the method or process may be performed by an UE having some margin in terms of measurement accuracy or measurement reporting accuracy, and this margin can be utilized for biasing (i.e. offsetting) a measurement value, such as a radio resource (management) measurement result, underlying a designated operation. Hence, the bias to be applied may be adjusted such that predefined measurement accuracy requirements and/or standard conformance requirements for the UE, which may be defined by valid standards or specifications, are still met (i.e. complied with and/or not violated), taking into account the UE's actual measurement accuracy, i.e. its measurement accuracy estimate.

For example, according to 3GPP/3GPP2 standardization, a UE in RRC_CONNECTED state performs Radio Resource Management (RRM) measurements in relation to the mobility procedure and reports its measurement results either periodically and/or whenever a reporting triggering criterion is fulfilled. The reporting triggering criteria (reporting events) are based on e.g. measured absolute reference signal received level (RSRP) values from the UE's serving cell and the relative RSRP/RSRQ measured value from a neighboring cell compared to measured RSRP/RSRQ value from the UE's serving cell. Also, (intra/inter frequency) measurement accuracy requirements are defined, e.g. as follows.

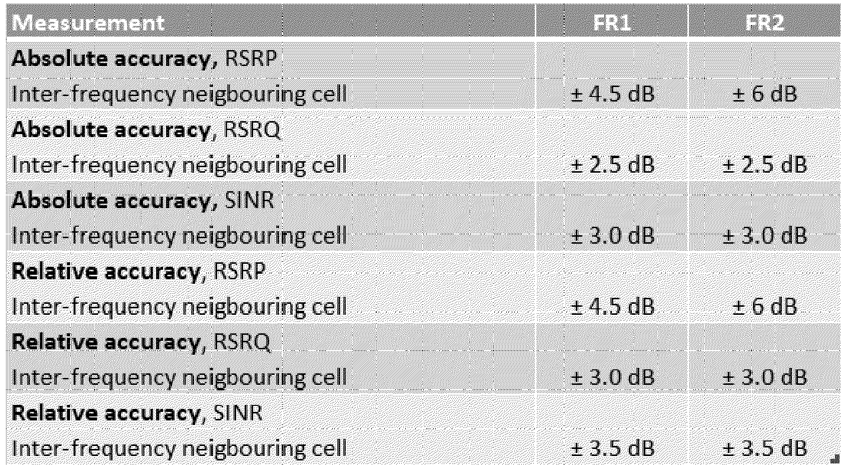

As can be seen, the (intra/inter-frequency) measurement accuracy requirement are quite relaxed, and modern UEs, such as smartphones, may be able to clearly outperform these requirements, i.e. to achieve a much better measurement accuracy than required. The aforementioned measurement accuracy requirements define the minimum requirements for a UE to pass the conformance tests. If a UE can implement more accurate measurements, it is free to do so as long as it is within the given limits. When observing the measurements conducted by the UE, they will in general follow a statistical distribution (which would commonly be defined from a mean (average) value and a standard deviation). When implementing a more accurate measurement, the expected outcome is that the mean value will be the same, but the standard deviation of the measurement outcome would be reduced. Accordingly, there is a margin in terms of measurement accuracy or measurement reporting accuracy.

If an UE with such a margin performs biasing a measurement value, such as a radio resource (management) measurement result, underlying a designated operation according to exemplifying embodiments, the bias can be set such that the biasing provides for promoting/demoting a candidate under consideration, as explained above, while still meeting the applicable requirements so as to pass the conformance tests, etc. That is, the bias can be set such that the standard deviation of the underlying RRM measurement is extended/broadened while still falling within the stipulated limits.

It is to be noted that the method or process of any one of Figures 1 and 2, even though referring to a single radio resource quantity or measurement value and a single candidate, may likewise be performed for plural radio resource quantities or measurement values and plural candidates. Accordingly, the bias adjustment may be realized per candidate such that the same bias or different biases is/are applied for different candidates, for exam ple.

In the following, specific examples are given for MUSIM devices, i.e. devices (UEs) with multiple universal subscriber identity modules (USIMs). For such MUSIM device, the above-outlined considerations apply accordingly.

It is to be noted that herein a universal subscriber identity module may generally comprise or relate to a physical or virtual module defining a subscription of a communication element or function in a communication network of a network operator.

For the subsequent description regarding MUSIM devices, it is assumed that the MUSIM device is a MUSIM UE with two USIMS, which is in RRC_CONNECTED state with its 1^{st} USIM and is in any RRC state, e.g. RRC_IDLE, RRC_INACTIVE or RRC_CONNECTED state, with its 2^{nd} USIM. In this regard, as explained above, it is noted that the 2^{nd} USIM can only be in any one of RRC_IDLE state or RRC_INACTIVE state in case of a DSDS MUSIM UE, while the 2^{nd} USIM can additionally also be in RRC_CONNECTED state in case of a DSDA MUSIM UE. Further, it is assumed that the MUSIM device implements a more accurate measurement algorithm (i.e. a radio resource (management) measurement algorithm having some margin in terms of measurement accuracy or measurement reporting accuracy), which makes it possible to utilize the reduced standard deviation of the measurement samples to introduce a bias to the measurement result and still stay within the measurement requirements as specified e.g. by 3GPP/3GPP2.

As an illustrative example, a DualRX DSDS or DSDA MUSIM UE makes benefit of its high measurement accuracy and, for its 1^{st} USIM in RRC_CONNECTED state, adds a negative offset (e.g. -2 dB) to the RSRP measured on neighboring cells (being identified as candidates e.g. based on some configuration) which would force the UE to act as SingleRX device considering the frequency used by the UE's 2^{nd} USIM (e.g. in RRC_IDLE/RRC_INACTIVE state). This will demote the problematic cells to be chosen as target cells, e.g. for cell handover or cell re-/selection. Additionally or alternatively, the UE can, for its 1^{st} USIM in RRC_CONNECTED state, add a positive offset (e.g. 2 dB) to the RSRP measured on neighboring cells which would not introduce a limitation (such as forcing the UE to act as SingleRX device), which will promote the unproblematic cells as target cells.

As another illustrative example, a DualRX/DualTX DSDA MUSIM UE makes benefit of its high measurement accuracy and, for its 1^{st} USIM in RRC_CONNECTED state, adds a negative offset (e.g. -2 dB) to the RSRP measured on neighboring cells (being identified as candidates e.g. based on some configuration) which would force the UE to act as SingleTX device considering the frequency used by UE's 2^{nd} USIM in RRC_CONNECTED. This will demote the problematic cells to be chosen as target cells, e.g. for cell handover or cell re-/selection. Additionally or alternatively, the UE can, for its 1^{st} USIM in RRC_CONNECTED state, add a positive offset (e.g. 2 dB) to the RSRP measured on neighboring cells which would not introduce a limitation (such as forcing the UE to act as SingleTX device), which will promote the unproblematic cells as target cells.

For example, depending on the actual running activity and other parameters, the UE can dynamically adjust/adapt the parameter(s) used for controlling the bias for either promoting or demoting certain networks (e.g. PLMN IDs) or cells within coverage of a given PLMN ID.

The aforementioned measures taken by the MUSIM UE will prevent/reduce the probability of the MUSIM UE to be handed over to or re-/selecting a serving cell on a frequency which will lead to some limitation (as this would result in an unfavorable band/frequency combination), such as the requirement of interruption in an RRC connection to allow the UE performing its RRC_IDLE/RRC_INACTIVE operations/activities in DSDS cases and performing simultaneous RRC_CONNECTED operations/activities in DSDA cases.

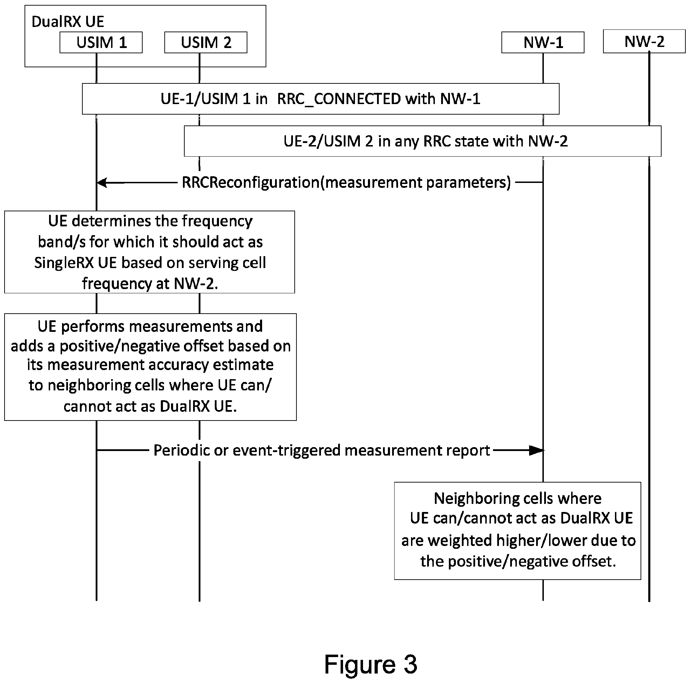

Figure 3 shows a sequence diagram illustrating an example of a procedure according to at least one exemplifying embodiment. The procedure of Figure 3 is operable be/between a MUSIM UE, which is exemplified as DualRX UE, and two network elements or functions, such as gNBs, of two networks, which are denoted as NW-1 and NW-2.

As is shown in Figure 3, it is assumed that the DualRX MUSIM UE is a DualRX/SingleTX or SualRX/DualTX MUSIM UE which is in RRC_CONNECTED state with the NW corresponding to its 1^{st} USIMs (i.e. USIM 1, NW-1), and which may be in RRC_IDLE/RRC_INACTIVE state or RRC_CONNECTED state with the NW corresponding to its 2^{nd} USIM (i.e. USIM-2, NW-2). It is to be noted that, as explained above, only a DSDA MUSIM UE can be in RRC_CONNECTED state with both USIMs, and thus needs to be able to maintain parallel RX and TX operations/activities across its USIMs.

The UE is configured for RRM measurements of its serving cell (of/for USIM 1, NW-1) as well as a list of neighboring cells by an RRCReconfiguration message. That is, the UE accepts a configuration for obtaining the measurement value, such as a configuration for a corresponding radio resource measurement or radio resource management measurement, from the communication control element or function (of NW-1).

Thereupon, the UE determines e.g. the frequency bands configured for neighboring cell measurements for which it should act as SingleRX based on the serving cell frequency at/of NW-2 (which may be accomplished e.g. either from FrequencyBandList for RRC_IDLE or RRC_INACTIVE state or from frequency bands indicated in MeasObjectNR for RRC_CONNECTED state). That is, the UE identifies a candidate for the RRM measurements.

Then, the UE performs the RRM measurements to obtain a corresponding measurement value and applies a bias to the thus obtained measurement value by adding a positive offset (which may be based on its measurement accuracy estimate) to neighboring cells where the UE can act as DualRX device and/or adding a negative offset (which may be based on its measurement accuracy estimate) to neighboring cells where the UE cannot act as DualRX device. Thereby, the UE promotes these neighboring cells where the UE can act as DualRX device and/or demotes these neighboring cells where the UE cannot act as DualRX device.

In a normal operation, the offset can be a positive value and will be used to promote selection of certain activities/operations (e.g. promoting specific carriers over others). If the UE is on a serving cell (of/for USIM 1, NW-1) with no DualRX problem with a current serving cell on NW-2, the same offset can be applied to serving cell measurement. Alternatively or additionally, a negative offset can be added to neighboring cells' measurements, where the UE cannot act as DualRX device.

The UE performs its measurement reporting trigger evaluation and provides the same as well as actual values in the report with the results after bias application (e.g. offset addition). That is, the UE provides a measurement report, including the biased measurement value for the one or more candidates (i.e. neighboring cells), to the communication control element or function (of NW-1).

Consequently, the neighboring cells with no limitation in DualRX(/DualTX) activities/operations will be promoted, and/or the neighboring cells with DualRX(/DualTX) limitation will be demoted. Based thereon, the NW-1 can perform accordingly, as is illustrated in Figure 3.

In view of the above example, it is to be noted that the UE determines e.g. which frequency band/s, cell/s, etc. are to be biased, wherein this determination is based on internal knowledge and/or corresponding configuration of the UE and does not require any measurement. So, the UE can appropriately apply the bias where is needed to avoid any limitation such as behaving as a SingleRX device instead of DualRX device, in terms of a designated operation to be executed, e.g. to the thus determined frequency band/s, cell/s, etc. This can be independent of the actual measurement value obtainment, such as e.g. the actual RRM measurement, namely independent of which frequency band/s, cell/s, etc. the UE is measuring and what the thus obtained measurement values are).

As is evident from the above, the RRM measurement is performed for one or more neighboring cells of a serving cell associated with the 1^{st} USIM and/or the serving cell associated with the 1^{st} USIM. Then, the bias is applied for promoting those one or more neighboring cells, for which a DualRX and/or DualTX operation mode is feasible, and/or demoting those one or more neighboring cells, for which a DualRX and/or DualTX operation mode is infeasible, and/or the bias is applied for promoting the serving cell associated with the 1^{st} USIM, if a DualRX and/or DualTX operation mode is feasible in the serving cell associated with the 1^{st} USIM. Based thereon, at least one cell for DualRX and/or DualTX operation mode is selected based on the biased measurement values of the one or more promoted and/or demoted cells, and the designated operation, such as e.g. cell handover or cell re-/selection, can be executed on the selected at least one cell for the DualRX and/or DualTX operation mode. In this regard, it may be determined, for which one or more neighboring cells a DualRX and/or DualTX operation mode is feasible or infeasible, based on a frequency range, a frequency band or a carrier of a serving cell associated with the 2^{nd} USIM and a frequency range, a frequency band or a carrier of the respective neighboring cell.

By virtue of exemplifying embodiments of the present disclosure, as evident from the above, autonomous performance optimization of a communication element or function, such as an UE-autonomous performance optimization in a mobile communication system, can be enabled/realized.

According to exemplifying embodiments, an UE-internal bias is introduced to measurements that will promote or demote candidates under consideration of a designated operation, while still complying with requirements. Thus, a margin in measurement accuracy can be exploited for promoting or demoting candidates under consideration of a designated operation.

According to exemplifying embodiments, a limitation of the UE is addressed, such as e.g. the limitation that a MUSIM UE has to act as DualRX/SingleTX or DualRX/DualTX device in view of certain frequency/band combinations, in that as UE-autonomous technique is provided to decrease (or make less likely) the scenarios where this limitation appears. Thus, a more efficient operation of the UE can be achieved in that the UE is enabled to optimize its resource usage.

According to exemplifying embodiments, such effects can be achieved in a manner that is out of control from the network. That is, network control is removed/avoided such that all actions are autonomously taken by/at the UE (not even awaiting network configuration or allowance) to introduce the needed bias to promote or demote certain candidates such as carriers, frequency bands, or the like. Due to the lack of any (need for) network control, exemplifying embodiments, including the communication element or function realizing corresponding methods, processes, procedures or operations, exhibit forward compatibility and backward compatibility.

Stated in other terms, the UE can apply a margin provided/available for measurement reporting accuracy to promote/demote specific candidates such as cells and thereby increase the time the UE can operate in an efficient manner, such as in DualRX(/DualTX) manner in case of a MUSIM UE, and prevent performance degradation.

As explained above, exemplifying embodiments are applicable for different purposes, in/for single-USIM und MUSIM devices, such as to prioritize a first frequency range over a second frequency range if the UE - for some reason and/or with respect to some operation - prefers to connect to the first frequency range instead of the second frequency range or certain carriers or frequency bands over others in the same frequency range.

The above-described functionality as well as its related operations, procedures, methods and processes may be implemented by respective functional elements, entities, modules, units, processors, or the like, as described below. These functional elements, entities, modules, units, processors, or the like, i.e. the implementation of one or more exemplifying embodiments, may be realized in a cloud environment.

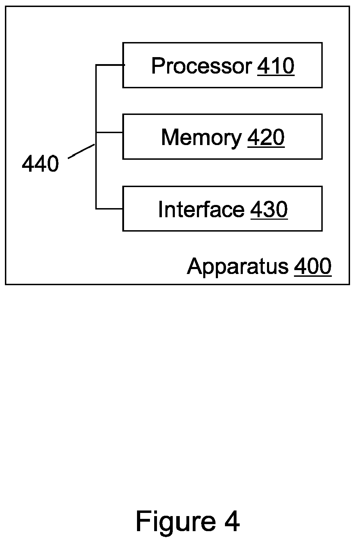

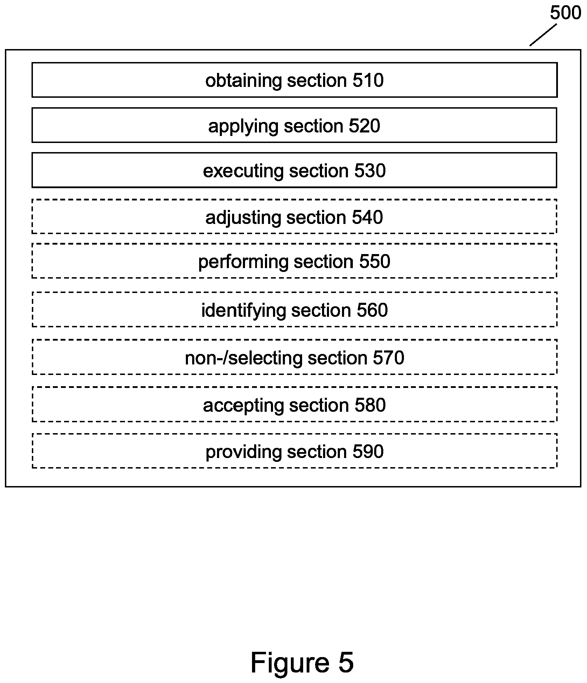

While in the foregoing exemplifying embodiments of the present disclosure are described mainly with reference to operations, procedures, methods and processes, corresponding exemplifying embodiments of the present disclosure also cover respective apparatuses, entities, modules, units, network nodes and/or systems, including software and/or hardware thereof. Respective exemplifying embodiments of the present invention are described below referring to Figures 4 and 5, while for the sake of brevity reference is made to the detailed description of respective corresponding configurations/setups, schemes, processes, sequences, methods as well as functionalities, principles and operations according to Figures 1 to 3.

In Figures 4 and 5, the blocks are basically configured to perform respective methods, procedures and/or functions as described above. The entirety of blocks are basically configured to perform the methods, procedures and/or functions as described above, respectively. With respect to Figures 4 and 5, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figures 4 and 5, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to exemplifying embodiments.

Figure 4 shows a schematic diagram illustrating an example of a structure of an apparatus according to at least one exemplifying embodiment. Herein, an apparatus can represent a physical entity or component, i.e. a structural device implementing a specific network element, entity or function or the functionality thereof as such, or a functional or logical entity or component. For example, the thus illustrated apparatus may be realized in or by a server or the like in a cloud environment, i.e. by a cloud-based implementation.

As indicated in Figure 4, according to at least one exemplifying embodiment, an apparatus 400 may comprise or realize at least one processor 410 and at least one memory 420 (and possibly also at least one interface 430), which may be operationally connected or coupled, for example by a bus 440 or the like, respectively.

The processor 410 and/or the interface 430 of the apparatus 400 may also include a modem or the like to facilitate communication over a (hardwire or wireless) link, respectively. The interface 430 of the apparatus 400 may include a suitable transmitter, receiver or transceiver connected or coupled to one or more antennas, antenna units, such as antenna arrays or communication facilities or means for (hardwire or wireless) communications with the linked, coupled or connected device(s), respectively. The interface 430 of the apparatus 400 is generally configured to communicate with at least one other apparatus, device, node or entity (in particular, the interface thereof).

The memory 420 of the apparatus 400 may represent a (non-transitory/tangible) storage medium (e.g. RAM, ROM, EPROM, EEPROM, etc.) and store respective software, programs, program products, macros or applets, etc. or parts of them, which may be assumed to comprise program instructions or computer program code that, when executed by the respective processor, enables the respective electronic device or apparatus to operate in accordance with the exemplifying embodiments of the present invention. Further, the memory 420 of the apparatus 400 may (comprise a database to) store any data, information, or the like, which is used in the operation of the apparatus.

In general terms, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the thus illustrated apparatus 400 is suitable for use in practicing one or more of the exemplifying embodiments, as described herein.

When in the subsequent description it is stated that the processor (or some other means) is configured to perform some function, this is to be construed to be equivalent to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function. It should be appreciated that herein processors, or more generally processing portions, should not be only considered to represent physical portions of one or more processors, but may also be considered as a logical division of the referred processing tasks performed by one or more processors.

According to at least one exemplifying embodiment, the thus illustrated apparatus 400 may represent or realize/embody a (part of a) communication element or function, or an element, function or entity of similar/comparable functionality or operability, in a mobile communication system, such as a UE (including a single- or multi-USIM/subscription device) in a 3GPP/3GGP2 network or system. Hence, the apparatus 400 may be configured to perform a procedure and/or exhibit a functionality and/or implement a mechanism, as described (for an UE or MUSIM device) in any one of Figures 1 to 3.

Accordingly, the apparatus 400 may be caused or the apparatus 400 or its at least one processor 410 (possibly together with computer program code stored in its at least one memory 420), in its most basic form, is configured to obtain a measurement value of a radio resource quantity for a candidate for a designated operation, apply a bias to the measurement value of the radio resource quantity for the candidate to obtain a biased measurement value for the candidate, and execute the designated operation with respect to the candidate based on the biased measurement value for the candidate.

As mentioned above, an apparatus according to at least one exemplifying embodiment may be structured by comprising respective units or means for performing corresponding operations, procedures and/or functions. For example, such units or means may be implemented/realized on the basis of an apparatus structure, as exemplified in Figure 4, i.e. by one or more processors 410, one or more memories 420, one or more interfaces 430, or any combination thereof.

Figure 5 shows a schematic diagram illustrating an example of a structure of apparatuses according to at least one exemplifying embodiment.

As shown in Figure 5, an apparatus 500 according to at least one exemplifying embodiment may represent or realize/embody a (part of a) communication element or function, or an element, function or entity of similar/comparable functionality or operability, in a mobile communication system, such as a UE (including a single- or multi-USIM/subscription device) in a 3GPP/3GGP2 network or system. Hence, the apparatus 500 may be configured to perform a procedure and/or exhibit a functionality and/or implement a mechanism, as described (for an UE or MUSIM device) in any one of Figures 1 to 3.

Such apparatus 500 may comprise (at least) one or more unit/means/circuitry, denoted by obtaining section 510, which represent any implementation for (or configured to) obtaining (obtain) a measurement value of a radio resource quantity for a candidate for a designated operation, one or more unit/means/circuitry, denoted by applying section 520, which represent any implementation for (or configured to) applying (apply) a bias to the measurement value of the radio resource quantity for the candidate to obtain a biased measurement value for the candidate, and one or more unit/means/circuitry, denoted by executing section 530, which represent any implementation for (or configured to) executing (execute) the designated operation with respect to the candidate based on the biased measurement value for the candidate.

Further, such apparatus 500 may additionally/optionally further comprise one or more of
one or more unit/means/circuitry, denoted by adjusting section 540, which represent any implementation for (or configured to) adjusting (adjust) the bias to be applied to the measurement value of the radio resource quantity for the candidate,
one or more unit/means/circuitry, denoted by performing section 550, which represent any implementation for (or configured to) performing (perform) a radio resource measurement or a radio resource management measurement,
one or more unit/means/circuitry, denoted by identifying section 560, which represent any implementation for (or configured to) identifying (identify) the radio resource quantity and/or the candidate for which the measurement value is to be obtained,
one or more unit/means/circuitry, denoted by non-/selecting section 570, which represent any implementation for (or configured to) non-/selecting (non-/select) the candidate for the designated operation based on the biased measurement value for the candidate
one or more unit/means/circuitry, denoted by accepting section 580, which represent any implementation for (or configured to) accepting (accept) a configuration for obtaining the measurement value from a communication control element or function,
one or more unit/means/circuitry, denoted by providing section 590, which represent any implementation for (or configured to) providing (provide) a measurement report, including the biased measurement value for the candidate, to a communication control element or function.

For further details regarding the operability/functionality of the apparatuses (or units/means thereof) according to exemplifying embodiments, reference is made to the above description in connection with any one of Figures 1 to 3, respectively.

According to exemplifying embodiments of the present disclosure, any one of the (at least one) processor, the (at least one) memory and the (at least one) interface, as well as any one of the illustrated units/means, may be implemented as individual modules, chips, chipsets, circuitries or the like, or one or more of them can be implemented as a common module, chip, chipset, circuitry or the like, respectively.

According to exemplifying embodiments of the present disclosure, a system may comprise any conceivable combination of any depicted or described apparatuses and other network elements or functional entities, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a basic system architecture of a (tele)communication network including a mobile communication system where some examples of exemplifying embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of exemplifying embodiments may also be able to communicate with other networks, such as a public switched telephone network or the Internet, including the Internet-of-Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is suitable to be implemented as software or by hardware without changing the idea of the present disclosure. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for exam ple.

Apparatuses and/or units/means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for enabling/realizing an autonomous performance optimization of a communication element or function, such as an UE-autonomous performance optimization in a mobile communication system. Such measures exemplarily comprise that a communication element or function in a mobile communication system obtains a measurement value of a radio resource quantity for a candidate for a designated operation, applies a bias to the measurement value of the radio resource quantity for the candidate to obtain a biased measurement value for the candidate, and executes the designated operation with respect to the candidate based on the biased measurement value for the candidate.

Even though the present disclosure is described above with reference to the examples according to the accompanying drawings, it is to be understood that the present disclosure is not restricted thereto. Rather, it is apparent to those skilled in the art that the present disclosure can be modified in many ways without departing from the scope of the inventive idea as disclosed herein.

List of acronyms and abbreviations
- 3GPP: 3rd Generation Partnership Project
- 3GPP2: 3rd Generation Partnership Project 2
- 2/3/4/5G: 2^{nd}/3^{rd}/4^{th}/5^{th} Generation
- 5GS: 5G System
- EPS: Evolved Packet Core
- DSDA: Dual SIM Dual Standby
- DSDS: Dual SIM Dual Active
- IMSI: International Mobile Subscriber Identity
- LTE(-A): Long Term Evolution (Advanced)
- MIMO: Multiple Input Multiple Output
- MNO: Mobile Network Operator
- MVNO: Mobile Virtual Network Operator
- MUMS: Multi USIM Multi Standby
- MUMA: Multi USIM Multi Active
- MUSIM: Multiple USIM
- NR: New Radio
- NW: Network
- RAN: Radio Access Network
- RRC: Radio Resource Control
- RRM: Radio Resource Management
- RSRP: Reference Signal Received Power
- RSRQ: Reference Signal Received Quality
- RX: Reception
- SIM: Subscriber Identity Module
- SINR: Signal-to-Interference-plus-Noise Ratio
- SUPI: Subscription Permanent Identifier
- TX: Transmission
- UE: User Equipment
- USIM: Universal Subscriber Identity Module

## Claims

1. An apparatus of a communication element or function in a mobile communication system, comprising:
means for obtaining a measurement value of a radio resource quantity for a candidate for a designated operation,
means for applying a bias to the measurement value of the radio resource quantity for the candidate to obtain a biased measurement value for the candidate, and
means for executing the designated operation with respect to the candidate based on the biased measurement value for the candidate.

2. The apparatus according to claim 1, wherein the applying means is configured to:
add an offset value to the measurement value of the radio resource quantity for the candidate for promoting the candidate in executing the designated operation and/or subtract an offset value from the measurement value of the radio resource quantity for the candidate for demoting the candidate in executing the designated operation, wherein the offset value is a positive number, and/or
multiply the measurement value of the radio resource quantity for the candidate by a weighting factor for promoting the candidate in executing the designated operation and/or divide the measurement value of the radio resource quantity for the candidate by a weighting factor for demoting the candidate in executing the designated operation, wherein the weighting factor is a number larger than 1.

3. The apparatus according to claim 1 or 2, wherein the applying means is configured to apply the bias to the measurement value of the radio resource quantity for the candidate such that
the candidate is promoted in executing the designated operation when the candidate is a favorable candidate for the designated operation or executing the designated operation on the candidate results in a favorable behavior, and/or
the candidate is demoted in executing the designated operation when the candidate is an unfavorable candidate for the designated operation or executing the designated operation on the candidate results in an unfavorable behavior.

4. The apparatus according to claim 3, wherein the candidate is a favorable candidate rather than an unfavorable candidate for the designated operation or executing the designated operation on the candidate results in a favorable behavior rather than an unfavorable behavior when causing one or more of:
reduced frequency conflict between networks, such as public land mobile networks, cells, frequency ranges, frequency bands or carriers,
improved simultaneous operation toward two or more communication control elements or functions or two or more network elements or functions,
reduced performance degradation,
reduced power consumption,
reduced switching delay,
reduced intermodulation or interference, and
increased bandwidth or data rate.

5. The apparatus according to any one of claims 1 to 4, further comprising:
means for adjusting the bias to be applied to the measurement value of the radio resource quantity for the candidate.

6. The apparatus according to claim 5, wherein
the adjusting means is configured to adjust the bias such that the obtained biased measurement value meets predefined measurement accuracy requirements and/or standard conformance requirements for the communication element or function, and/or
the adjusting means is configured to determine a measurement accuracy estimate of the obtained measurement value, wherein the bias is adjusted based on the determined measurement accuracy estimate.

7. The apparatus according to claim 5 or 6, wherein the adjusting means is configured to adjust based on one or more of:
a current operating activity and/or condition of the communication element or function,
a prioritization of at least one of a network, such as a public land mobile network, a cell, a frequency range, a frequency band, and a carrier, or any combination thereof,
a number of served networks, such as one or more public land mobile networks,
a number of active cells, frequency ranges, frequency bands and/or carriers,
a power consumption per cell, frequency range, frequency band and/or carrier,
a switching delay per cell, frequency range, frequency band and/or carrier,
a non-/availability of an external power source,
an extent of available power, and
a bandwidth and/or data rate requirement.

8. The apparatus according to any one of claims 1 to 7, wherein
the obtaining means is configured to perform a radio resource measurement or a radio resource management measurement, and/or
the obtaining means is configured to identify the radio resource quantity and/or the candidate for which the measurement value is to be obtained, and/or
the executing means is configured to non-/select the candidate for the designated operation based on the biased measurement value for the candidate.

9. The apparatus according to any one of claims 1 to 8, further comprising:
means for accepting a configuration for obtaining the measurement value from a communication control element or function, and/or
means for providing a measurement report, including the biased measurement value for the candidate, to a communication control element or function.

10. The apparatus according to any one of claims 1 to 9, wherein
the radio resource quantity is at least one of reference signal received power, reference signal received quality, and signal-to-interference-plus-noise ratio, and/or
the candidate is at least one of one or more networks, such as one or more public land mobile networks, one or more cells, one or more frequency ranges, one or more frequency bands, and one or more carriers, and/or
the designated operation is at least one of a network or cell handover, a cell selection or reselection, a frequency range selection or reselection, a frequency band selection or reselection, and a carrier selection or reselection.

11. The apparatus according to any one of claims 1 to 10, wherein
the communication element or function comprises a user equipment which involves a single network subscription module, including a single subscriber identity module or a single universal subscriber identity module.

12. The apparatus according to any one of claims 1 to 10, wherein
the communication element or function comprises a user equipment which involves multiple network subscription module, including multiple subscriber identity modules or multiple universal subscriber identity modules, and
the user equipment is in radio resource control, RRC, connected state with a first network subscription module, and is in any radio resource control, RRC, state with a second network subscription module.

13. The apparatus according to claim 12, wherein
the radio resource measurement is performed for one or more neighboring cells of a serving cell associated with the first network subscription module and/or the serving cell associated with the first network subscription module,
the applying means is configured to apply the bias for promoting those one or more neighboring cells, for which a dual-reception and/or dual-transmission operation mode is feasible, and/or demoting those one or more neighboring cells, for which a dual-reception and/or dual-transmission operation mode is infeasible, and/or for promoting the serving cell associated with the first network subscription module, if a dual-reception and/or dual-transmission operation mode is feasible in the serving cell associated with the first network subscription module, and
the executing means is configured to select at least one cell for the dual-reception and/or dual-transmission operation mode based on the biased measurement values of the one or more promoted and/or demoted cells, and to execute the designated operation on the selected at least one cell for the dual-reception and/or dual-transmission operation mode.

14. The apparatus according to claim 13, wherein the applying means is configured to:
determine, for which one or more neighboring cells a dual-reception and/or dual-transmission operation mode is feasible or infeasible, based on a frequency range, a frequency band or a carrier of a serving cell associated with the second network subscription module and a frequency range, a frequency band or a carrier of the respective neighboring cell.

15. A method of a communication element or function in a mobile communication system, comprising:
obtaining a measurement value of a radio resource quantity for a candidate for a designated operation,
applying a bias to the measurement value of the radio resource quantity for the candidate to obtain a biased measurement value for the candidate, and
executing the designated operation with respect to the candidate based on the biased measurement value for the candidate.

16. The method according to claim 15, wherein applying the bias to the measurement value of the radio resource quantity for the candidate comprises:
adding an offset value to the measurement value of the radio resource quantity for the candidate for promoting the candidate in executing the designated operation and/or subtracting an offset value from the measurement value of the radio resource quantity for the candidate for demoting the candidate in executing the designated operation, wherein the offset value is a positive number, and/or
multiplying the measurement value of the radio resource quantity for the candidate by a weighting factor for promoting the candidate in executing the designated operation and/or dividing the measurement value of the radio resource quantity for the candidate by a weighting factor for demoting the candidate in executing the designated operation, wherein the weighting factor is a number larger than 1.

17. The method according to claim 15 or 16, further comprising:
adjusting the bias to be applied to the measurement value of the radio resource quantity for the candidate.

18. A computer program product comprising computer program code which, when the computer program code is executed on a computer, is configured to cause the computer to operate as the apparatus according to any one of claims 1 to 14 or to carry out the method according to any one of claims 15 to 17.
